# FASCICULE DE BREVET EUROPEEN

(11) **EP 0 678 995 B1**
(45) Date de publication et mention de la délivrance du brevet: **12.03.1997**
(21) Numéro de dépôt: 95470017.5
(22) Date de dépôt: 19.04.1995
(51) Int. Cl.: H04L 12/28

(54) **Système comprenant un appareil de communication de changement de tarification**
Anordnung mit Gerät das Tarifänderungen überträgt
System with apparatus communicating tarification changes

(30) Priorité: 22.04.1994 FR 9405060
(43) Date de publication de la demande: 25.10.1995
(73) Titulaire: SGS-THOMSON MICROELECTRONICS S.A., 94250 Gentilly (FR)
(72) Inventeur: Le van Suu, Maurice, F-57000 Metz (FR)
(74) Mandataire: Schmit, Christian Norbert Marie

(56) Documents cités:
- IEEE TRANSACTIONS ON CONSUMER ELECTRONICS, vol.37, no.3, Août 1991, NEW YORK US pages 406 - 412, XP263215 J.MIKE SURRAT 'INTEGRATION OF CEBUS WITH UTILITY LOAD MANAGEMENT AND AUTOMATIC METER READING'
- REVUE GENERALE DE L'ELECTRICITE, no.10, Novembre 1992, PARIS FR pages 38 - 43, XP320632 J.P.LOBERT 'LES COURANTS PORTEURE: L'ENERGIE COMMUNICANTE'

## Description

La présente invention concerne un système de détection et de communication de changement de tarification dans une installation comprenant une pluralité d'organes répartis sur un support de transmission d'informations.

L'invention trouve une application particulièrement avantageuse, dans le domaine de la gestion de réseaux domestiques informatisés.

Les réseaux domestiques informatisés comprennent en général une pluralité d'appareils répartis sur une ligne de transmission d'informations. Ces appareils peuvent être des appareils domestiques proprement dits, tels que téléviseur, réfrigérateur, machine à laver, radiateur, etc., ou encore une ou plusieurs stations de contrôle destinées à recevoir des instructions ou des informations relatives au fonctionnement des autres appareils. Ces instructions sont, par exemple, des ordres d'arrêt ou de marche provenant d'un utilisateur ou des appareils eux-mêmes. A leur tour, la ou les stations de contrôle adressent aux autres appareils de l'installation, des ordres de commande sous la forme d'un message permettant d'obtenir les modifications de fonctionnement désirées.

Pour adresser ces ordres de commande, on utilise de façon usuelle divers types de support pour la ligne de transmission d'informations, comme le courant porteur, les câbles coaxiaux, les paires torsadées, le rayonnement infrarouge et les radiofréquences par voie hertzienne, de même que les fibres optiques, les ultrasons, etc. Bien que d'application très générale, l'invention concerne plus spécialement le courant porteur, support de choix pour les installations domestiques.

Dans "LES COURANTS PORTEURS: L'ENERGIE COMMUNICANTE", de J.P. LOBERT, paru dans le n°10 de REVUE GENERALE D'ELECTRICITE, novembre 1992, pages 38-43, un exemple de ce qui peut être réalisé en utilisant les courants porteurs est donné. Cet article dévoile plus particulièrement l'utilisation de courants porteurs comme réseau de communication.

L'installation envisagée ici peut être du type à intelligence centralisée, avec une station de contrôle échangeant des messages avec d'autres appareils jouant le rôle de stations esclaves. Dans une installation à intelligence répartie, chaque appareil peut jouer par autoprogrammation le rôle de maître ou d'esclave sans passer par une station de contrôle qui, elle, ne fait qu'écouter les messages.

Les appareils destinés à être intégrés dans une installation domestique sont, jusqu'à présent, prévus par les constructeurs pour travailler dans une configuration de réception donnée définie par une vitesse de transmission de message de commande qui dépend du type de l'appareil concerné. C'est ainsi que les appareils de chauffage peuvent fonctionner avec une vitesse relativement lente de 300 bauds, cette vitesse étant cependant nettement insuffisante pour les appareils d'éclairage qui exigent une vitesse de transmission sensiblement plus grande d'au moins 2400 bauds. De manière à permettre à ces divers appareils de coexister sur un même support de transmission d'informations, un mouvement d'harmonisation s'est amorcé en 1991 visant à imposer une vitesse unique de transmission de 1200 bauds. Cependant, il est à prévoir que, dans un avenir relativement proche, des appareils fonctionnant à une vitesse de transmission d'informations supérieure, 2400 bauds par exemple, devront être raccordés sur des installations répondant au standard actuel. C'est pourquoi, de manière à obtenir une compatibilité la plus complète, la tendance est de développer des appareils pouvant émettre et recevoir des messages à au moins deux vitesses de transmissions d'informations. Un système de transmission de données dans une installation de ce type comprenant de tels appareils est décrit dans la demande de brevet européen EP-A-0 570 293.

Par ailleurs, en ce qui concerne la tarification de l'électricité, il existe des systèmes d'exploitation à tarif modulé. Ainsi, en France, Electricité de France (EDF) propose un tel système depuis 1956. La tarification sera différente suivant que l'on se trouve dans une période dite "heures pleines" ou dans une autre période dite "heures creuses". En pratique, les heures pleines correspondent aux heures de la journée où la consommation est la plus importante, approximativement entre six heures du matin et dix heures du soir. Les heures creuses correspondent aux heures de faible consommation, approximativement entre dix heures du soir et six heures du matin. Afin de tenter de répartir, le plus uniformément possible, la consommation globale sur l'ensemble de la journée, l'EDF propose des tarifs moins élevés en heures creuses qu'en heures pleines. Par l'incitation du client à réaliser des économies, EDF cherche ainsi à abaisser ses coûts de production (coûts de mise en marche d'alternateurs de centrales hydro-électriques par exemple) et accessoirement, à éviter une saturation éventuelle du réseau de distribution induisant des délestages.

A l'heure actuelle, l'exploitation des informations de tarification se fait généralement au niveau d'appareils (compteur, relais de télécommande) accessibles uniquement à des employés de l'EDF pour éviter toute fraude. L'information concernant la tarification comporte une trame de 41 bits codés en RZ (retour à zéro), d'une durée de 103 secondes, les informations binaires 1 étant représentées par la présence d'une fréquence de modulation de 175 Hz.

En pratique, un relais de télécommande comprend des moyens de filtrage permettant de détecter la présence d'une modulation sur le réseau, des moyens de digitalisation pour transformer en successions d'impulsions binaires le signal reçu, un microprocesseur pour exploiter ces informations. Quand un signal de changement de tarification est reçu, une bobine est activée qui modifie un index au niveau du compteur. Cet index modifie alors l'incrémentation du compteur en augmentant la vitesse d'incrémentation si on passe en heures pleines, ou en la diminuant si on passe en heures creuses.

"INTEGRATION OF CEBUS WITH UTILITY LOAD MANAGEMENT AND AUTOMATIC METER READING", de J. MIKE SURRATT, paru dans IEEE TRANSACTION ON CONSUMER ELECTRONICS, vol 37, n°3, aout 1991, pages 406-412, présente une solution utilisant un réseau de communication hertzien pour communiquer avec les compteurs électriques et commuter certains appareils électriques.

La possibilité est donnée aux usagers de se connecter au relais de télécommande pour bénéficier de l'information. Cela se fait par le biais d'une prise autorisant la commande d'un relais de faible puissance. Pour cette opération, il est nécessaire de faire appel à un installateur spécialisé et d'avoir l'autorisation d'EDF pour ouvrir ce relais. D'autre part, il faut installer des câbles supplémentaires qui vont jusqu'au relais. Cette possibilité offerte est donc peu pratique et financièrement coûteuse. Les usagers se tournent donc de préférence vers des boîtiers programmables munis d'une horloge interne et qui permettent par exemple de mettre en route et d'arrêter un appareil (par exemple un chauffe-eau) à heures fixes, par exemple 23 heures et 6 heures du matin. Ce type de boîtier peut être installé sans l'accord de l'EDF mais n'a pas la précision du relais de télécommande. En effet, l'information représentative du changement d'horaire n'est pas en pratique envoyée à un instant précis, mais dans une certaine plage horaire. Il existe donc une probabilité non nulle de mettre un appareil en marche, à l'aide d'un boîtier de programmation, alors que la tarification n'est pas encore passée en heures creuses, ou de ne pas l'arrêter alors qu'on est passé en heures pleines.

D'autre part, dans le cadre d'une installation domestique, il n'est pas prévu que le relais de télécommande communique avec les appareils : en effet, il se poserait alors un problème de définition d'un tel relais, les installations domestiques employant des supports de transmission et des protocoles d'échange multiples et variés. Un système de distribution électrique dans lequel le distributeur prévoirait un relais communiquant avec les appareils des usagers présenterait des problèmes de portabilité et d'usage. Effectivement, cela tendrait à imposer aux usagers un support et un protocole donnés (si ils souhaitent exploiter l'information bien entendu). Pratiquement, les abonnés équipés d'une installation domestique différente ne pourraient exploiter le changement de tarif qu'en changeant leur installation, donc au prix d'un surcoût prohibitif. D'autre part, l'utilisation d'un appareil en fonction d'une information envoyée par un distributeur obligerait en pratique l'usager à gérer cette information individuellement au niveau de chaque appareil. En effet, une telle information ne pourrait être que de caractère générale, le distributeur étant à priori ignorant des appareils que possède l'usager et de l'usage qu'il souhaite en faire. En terme de fonctionnalité, ce système serait donc équivalent à la solution qui consiste à se relier physiquement à un relais de télécommande. Si par exemple un usager souhaitait utiliser un appareil apte à recevoir l'information alors que le tarif est le plus élevé, il devrait physiquement se déplacer pour configurer cet appareil de manière à ce qu'il ignore l'information de tarification. Enfin, ce qui concerne les fabricants d'appareils domestiques, il se poserait un problème de définition des appareils, les distributeurs d'électricité mettant en oeuvre des systèmes d'exploitation différents suivant les pays.

Il existe donc un système de tarification variable qui offre la possibilité de gérer de manière plus économique sa consommation d'énergie mais ce potentiel est actuellement peu exploitée pour des raisons pratiques et économiques.

Un but de l'invention est de proposer une solution technique permettant de gérer indépendamment des distributeurs d'électricité, les informations de tarification envoyées par ceux-ci sur un réseau de distribution électrique.

Un autre but de l'invention est de proposer une solution technique permettant de gérer les informations de tarification de manière adaptée aux configurations des installations des usagers, et aux souhaits des usagers quant à l'usage qu'il souhaitent faire de leurs installations.

Ainsi, l'invention propose un système de transmission de données dans une installation domestique comprenant une pluralité d'appareils répartis sur un support de transmission d'informations, et un appareil de communication, le dit appareil de communication comprenant des moyens de réception d'informations présentes sur un réseau de distribution électrique et représentatives d'un changement de tarification, des moyens pour transcrire les informations de changement de tarification en informations formatées selon un protocole d'échange, des moyens pour émettre ces informations formatées sur le support de transmission d'informations en direction d'un appareil donné ou d'un ensemble d'appareil de l'installation, ces appareils comprenant des moyens de réception de ces informations formatées.

La figure 1 est un schéma représentant un réseau de distribution électrique.

La figure 2 donne la composition typique d'un message représentatif d'une information de changement de tarification.

La figure 3 est un schéma représentant une installation comprenant des appareils répartis sur une ligne de courant porteur.

La figure 4 donne la composition typique d'un message à transmettre entre deux appareils de la figure 3.

La figure 5 est un schéma d'un premier appareil destiné à traiter l'information de changement de tarification et d'un appareil récepteur recevant la dite information formatée par le premier appareil suivant le protocole d'échange de la figure 4.

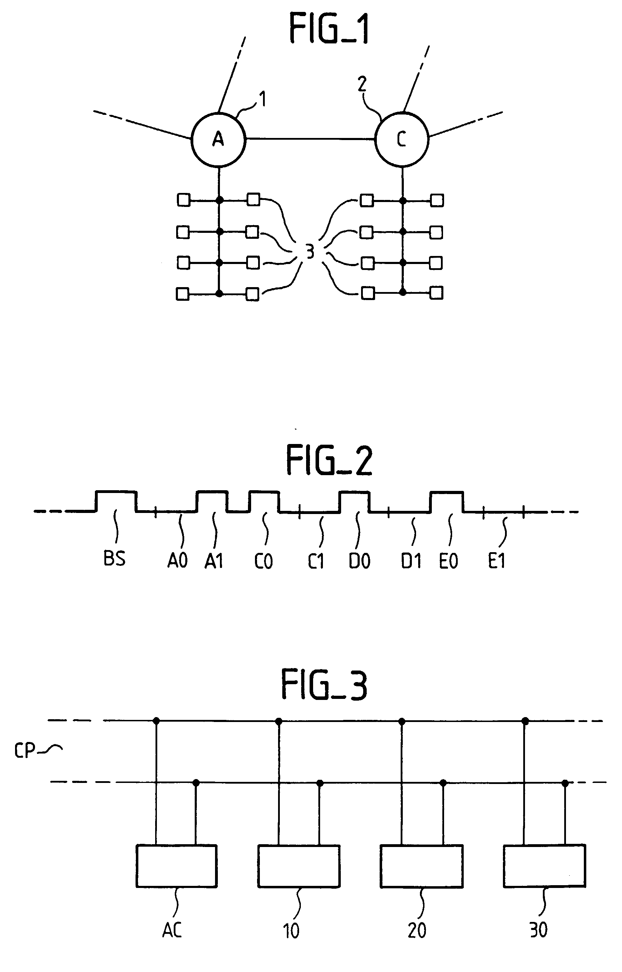

La figure 1 montre de manière schématique, un réseau de distribution électrique. Ce réseau comprend des baies d'émissions 1 et 2. Les baies d'émission sont connectées entre elles, et chaque baie est connectée à un ensemble d'abonnés 3.

Pour des raisons de lissage de la consommation globale de l'ensemble des abonnés, le passage en heures creuses ou en heures pleines n'est pas habituellement simultané pour l'ensemble des abonnés à un réseau de distribution. En effet, si le passage s'effectuait au même instant et que les abonnés profitaient par exemple du passage en heures creuses pour mettre en marche des chauffe-eau, la demande en électricité sur le réseau croîtrait instantanément et il y aurait alors un risque de saturation du réseau.

Pour cette raison, les distributeurs d'électricité étalent généralement le changement de tarification sur une plage horaire, par exemple une demi-heure, l'instant du changement de tarification étant fonction de la baie à laquelle on est rattaché.

Pratiquement, le changement de tarification au niveau des installations des abonnés se traduit par l'envoi d'une information de tarification des baies d'émission vers ces installations. Cette information est décodée au niveau de relais de télécommande et répercutées au niveau des compteurs, typiquement par commutation d'un index qui augmente ou diminue la vitesse d'incrémentation du compteur.

La figure 2 montre un exemple de codage d'information de tarification. Dans cet exemple, l'information est codée en RZ, sur 8 bits A0, A1... à E0, E1. En pratique, l'information pourra comporter un nombre de bits plus important (41 par exemple dans un système employé par EDF), et comporter d'autres données que l'indication de changement de tarification. Néanmoins, par soucis de concision, on se limitera dans la description aux 8 bits cités. Les 8 bits sont regroupés en quatre doublets successifs de bits. Chaque doublet de bits (A0 et A1), (C0 et C1), (D0 et D1), (E0 et E1), est utilisé pour coder un instant de changement de tarification. Par exemple, on pourra être connecté à une baie d'émission pour laquelle les changements de tarification sont codés sur le premier doublet (A0, A1). EDF définit ainsi quatre familles d'abonnés, chaque famille étant caractérisée par un instant donné de changement de tarification.

Dans chaque doublet, le deuxième bit est utilisé pour informer du changement de tarification et le premier bit est utilisé pour informer d'une continuation de tarification. Dans l'exemple ci-dessus, si le bit A0 est à 1 alors il n'y a pas changement de tarification, et si c'est le bit A1 qui est à 1, il y a changement.

Un bit à 1 se caractérise par la présence d'une fréquence de modulation de 175 Hz durant 1,5 seconde puis de l'absence de fréquence de modulation pendant 1 seconde (codage RZ). Un bit à 0 se caractérise par l'absence de fréquence de modulation durant 2,5 secondes.

Afin de synchroniser la réception et le traitement des bits reçus, les doublets sont précédés d'un bit de synchronisation BS, qui est à l'état 1 durant 2 secondes et à l'état 0 durant 1 seconde.

Dans l'hypothèse où l'on est raccordé à une baie d'émission codant l'information sur le premier doublet (A0, A1), le changement de tarification sera caractérisé par la réception d'une série de doublets (01, 10, 10, 10). On pourrait très bien imaginer que l'information soit codée sur un seul doublet, la tarification changeant alors pour l'ensemble des abonnés au même instant. On peut même envisager que l'information soit alors codée sur un seul bit . En l'occurrence, l'invention vise à détecter et répercuter l'information de changement de tarification et ne saurait être limitée par un format particulier d'information. Si on reçoit une série de doublet différente, l'information de changement de tarification étant par exemple codée sur le deuxième doublet, elle ne sera pas prise en compte car elle indique un changement de tarification pour une autre famille d'abonnés.

Sur le réseau de distribution électrique, quatre trames d'informations seront successivement envoyées, chacune d'entre elles correspondant au changement de tarification d'une famille d'abonnés, suivant les baies d'émission auxquelles ils sont raccordés (en effet, en pratique, le nombre de baies est supérieur au nombre de familles). Les abonnés reçoivent donc les quatres trames d'information successives représentatives des changements de tarification pour les différentes zones. En pratique, chaque relais de télécommande d'un abonné est conçu pour prendre en compte une des quatre trames différentes. Un relais est dit de type A, C, D ou E suivant qu'il répercute l'information de changement de tarification au niveau du compteur qui lui est associé, après avoir reçu la première, la deuxième, la troisième ou la quatrième trame. En général, les relais de télécommande sont munis d'une fenêtre de lecture permettant de lire une information indiquant leur type. Cela permet par exemple à un agent de maintenance de vérifier la correspondance entre le type du relais et la baie à laquelle est raccordé l'abonné.

La figure 3 montre de manière schématique un système de transmission de données dans une installation domestique comprenant une pluralité d'appareils AC, 10, 20, 30 répartis sur un support d'informations, ici le secteur. L'installation domestique pourra prendre place dans une habitation ou une entreprise. Les appareils 10, 20, 30 pourront être par exemple des chauffe-eau, des radiateurs, des machines à laver ou à sécher le linge, des machines à laver la vaisselle.

De préférence, la transmission d'informations entre les différents appareils de l'installation se fait par courant porteur à travers le réseau de distribution d'énergie de l'installation et non pas à travers une ligne de transmission réservées à la circulation d'informations. Cependant, si une telle ligne existait, elle pourrait tout aussi bien être utilisée à cette fin.

Dans un exemple, les informations sont transmises d'un organe à l'autre, sur le secteur CP (par courant porteur), par une modulation de deux fréquences distinctes (ayant de préférence un indice de modulation inférieur à un). Les informations binaires 0 et 1 sont représentées par exemple par la présence respective d'une première fréquence de modulation de 132 kHz et d'une deuxième fréquence de modulation de 133 kHz.

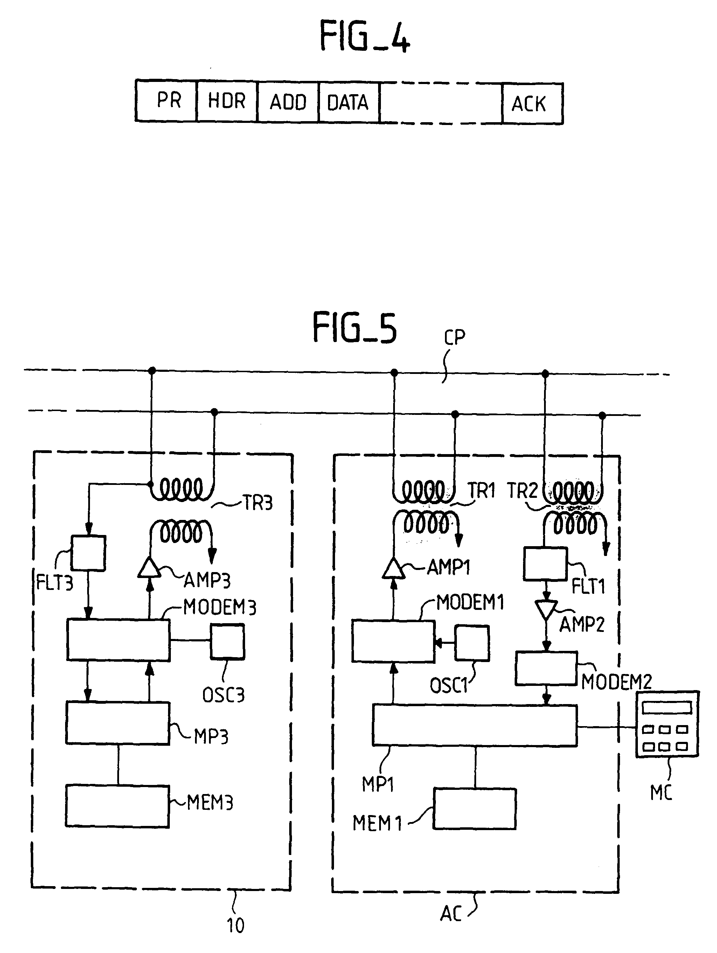

Les informations à émettre et recevoir entre les différents appareils sont formatées suivant un protocole d'échange. La figure 4 présente la structure habituelle d'une information formatée suivant un protocole d'échange dans une installation domestique informatisée. Cette structure comprend notamment un préambule PR, un en-tête HDR, une zone ADD d'adresses comportant l'adresse de l'appareil émetteur de l'information et celle de l'appareil récepteur destinataire, une zone DATA de données et une zone ACK d'acquittement dans laquelle l'organe émetteur indique s'il désire ou non recevoir un message d'acquittement en réponse au message émis. De préférence une information pourra, comme il est déjà connu, être adressée à un sous-ensemble des appareils (par exemple tous les radiateurs d'une habitation), voire à l'ensemble des appareils. Il suffit de prévoir une adresse représentative d'un sous-ensemble ou de l'ensemble des appareils, cette adresse étant vue par le sous-ensemble ou l'ensemble de manière équivalente à leur adresse propre.

L'appareil AC est destiné à détecter la présence de l'information de changement de tarification émise par la baie d'émission à laquelle est raccordée l'installation domestique et à retransmettre cette information sur cette installation, après une mise en forme suivant le protocole d'échange décrit ci-dessus.

Par exemple, l'appareil AC retransmet cette information de changement de tarification vers l'organe 10, celui-ci commandant une machine à laver programmée de telle sorte qu'elle soit mise en marche après un passage en heures creuses.

La constitution générale des appareils AC et 10 est donnée figure 5.

L'appareil AC comprend de préférence un circuit à microprocesseur pour émettre des signaux de commande à l'appareil 10, et pour recevoir et traiter les signaux de changement de tarification reçus d'une baie d'émission. Cet appareil comporte ses propres programmes de fonctionnement, qui peuvent par exemple être contrôlés par l'utilisateur par l'intermédiaire d'une console MC comprenant un clavier de commande et un écran de contrôle ou bien des boutons poussoirs. On peut aussi prévoir que le circuit à microprocesseur est contrôlé par un micro-ordinateur personnel, l'utilisateur pouvant alors définir à volonté des programmes de fonctionnement du microprocesseur. Par exemple, l'utilisateur pourra décider de ne répercuter l'information de changement de tarification qu'après avoir reçu les quatre trames d'information de changement de tarification, ou bien décider de répercuter cette information après avoir reçu une trame donnée, s'il sait, par lecture au niveau du relais de télécommande, à quelle famille il est relié. La configuration du fonctionnement de l'appareil AC pourra aussi être réalisée par le biais du secteur à partir d'une station de contrôle de l'installation domestique.

Outre un microprocesseur MP1, ses mémoires de programme et de travail MEM1, l'appareil AC comporte les moyens nécessaires pour produire les signaux à transmettre sur le secteur en direction des autres appareils de l'installation. Ces moyens comportent de préférence, un oscillateur OSC1 pour produire une fréquence porteuse locale (132 ± 1 kHz). La sortie de l'oscillateur OSC1 est appliquée, à travers un mélangeur et modulateur MODEM1, à un premier amplificateur AMP1, et la sortie de l'amplificateur AMP1 est appliquée au secondaire d'un premier transformateur TR1 dont le primaire est connecté au secteur. Quand il souhaite émettre un message formaté vers un autre appareil, un sous-ensemble d'appareils, ou à l'ensemble des autres appareils du réseau, l'appareil AC va insérer dans le champ d'adresse ADD l'information d'adressage correspondante. Cette information est typiquement mémorisée dans la mémoire MEM1 lors de la configuration de l'appareil AC par l'abonné. On ne rentrera pas dans le détail de cette configuration de l'appareil AC, de telles fonctionnalités étant bien connues dans l'état de l'art des réseaux domestiques. On notera simplement que cette configuration de l'appareil AC est logiquement faite par l'abonné et que les informations contenues dans la mémoire MEM1 sont bien entendu liées aux appareils de l'installation et à l'usage que souhaite en faire l'abonné. L'appareil AC se comporte fonctionnellement comme une station de contrôle dédiée à la gestion de l'installation en fonction de la tarification électrique. Pour ce faire, il est pourvu de moyens permettant de recevoir et de transcrire l'information de changement de tarification envoyée par le distributeur d'électricité. Etant pourvu de moyens de configuration (dans l'exemple, la console MC) il permet de gérer l'usage des appareils à distance. L'abonné n'aura donc plus à se déplacer pour arrêter ou mettre en marche ses appareils en fonction de la tarification. Ainsi, il pourra par exemple décider de mettre en marche l'appareil 10 en heures pleines en agissant au niveau de l'appareil AC de telle sorte qu'il envoie un message de commande de mise en marche de cet appareil. Par ailleurs, on pourra décider que l'envoi de l'information de changement de tarification de l'appareil AC vers l'appareil 10 sera précédé de l'envoi d'un message d'interrogation pour déterminer l'état (arrêt ou marche) de l'appareil 10. Si l'appareil 10 est en marche au moment d'un passage en heures pleines , on n'enverra pas de message de changement de tarification depuis l'appareil AC afin, par exemple, de terminer un cycle de lavage si l'appareil 10 est une machine à laver.

Les informations qui viennent du secteur et qui sont représentatives d'un changement de tarification, arrivent par un deuxième transformateur TR2. Elles sont transmises à une cellule de filtrage FLT1 permettant de détecter la présence d'une modulation (par exemple à 175 Hz) sur le secteur. La sortie de la cellule de filtrage est reliée à l'entrée d'un deuxième amplificateur AMP2, dont la sortie est connectée à l'entrée d'un démodulateur MODEM2 dont la sortie fournit au microprocesseur MP1, l'information de changement de tarification sous forme numérique.

L'appareil 10 comporte de même des moyens de réception et de transmission, incluant par exemple un microprocesseur MP3, des mémoires de programmes et de travail MEM3. Il comporte de préférence les moyens nécessaires pour recevoir et envoyer des signaux sur le secteur, suivant le protocole d'échange défini. Ces moyens comportent un oscillateur OSC3 pour produire une fréquence porteuse locale. La sortie de l'oscillateur est appliquée, à travers un modulateur/démodulateur MODEM3, à un amplificateur AMP3, et la sortie de l'amplificateur AMP3 est appliquée au primaire d'un transformateur TR3 dont le secondaire est connecté au réseau de distribution électrique du courant porteur CP.

Les informations (132 ou 133 kHz) issues du secteur et qui sont destinées à cet appareil 10 (formatées suivant le protocole d'échange décrit ci-dessus) arrivent par le transformateur TR3. Elles sont transmises à une cellule de filtrage FLT3 permettant de détecter la présence d'une modulation sur le support de transmissions d'informations. La sortie de la cellule de filtrage est reliée au modulateur/démodulateur et mise en forme. La sortie de ce circuit est reliée au microprocesseur MP3. Les signaux reçus du réseau des autres appareils sont démodulés et transformés en successions d'impulsions binaires qui sont exploitables par le microprocesseur MP3.

Ainsi, l'appareil AC reçoit l'information de changement de tarification du secteur par le second transformateur TR2 et peut la retransmettre, formatée suivant le protocole d'échange, à l'appareil 10 par le biais du premier transformateur TR1.

On pourrait envisager que l'appareil AC ne comporte qu'un seul transformateur et qu'il ait une structure comparable à celle de l'appareil 10. Dans ce cas, comme ce circuit est destiné à recevoir une information de tarification suivant un format particulier et à la retransmettre suivant un format différent, il sera nécessaire de prévoir, si l'appareil AC est apte à recevoir des informations formatées suivant le protocole d'échange, des moyens de reconnaissance de la vitesse de transmission des informations reçues, ces moyens étant intercalés entre le modulateur/démodulateur, et le microprocesseur de cet appareil AC.

De tels moyens sont décrits en détail dans la demande de brevet européen EP-A-0 570 293.

Bien que l'invention ait été décrite dans le cadre d'un support de transmission de type secteur, on pourrait très bien imaginer que le support soit différent, par exemple par paires torsadées, câbles coaxiaux, radiofréquences, etc. Dans ce cas, seul l'appareil AC sera connecté par le biais d'un transformateur au réseau de distribution électrique pour recevoir, de la baie d'émission à laquelle est raccordé l'abonné, l'information de changement de tarification.

## Revendications

1. Système de transmission de données dans une installation domestique comprenant une pluralité d'appareils (10, 20, 30) répartis sur un support de transmission d'informations (CP), et un appareil de communication (AC), caractérisé en ce que le dit appareil de communication comprend des moyens de réception d'informations (TR2, FLTl, AMP2, MODEM2) présentes sur un réseau de distribution électrique et représentatives d'un changement de tarification, des moyens pour transcrire (MP1, MEM1) les informations de changement de tarification en informations formatées selon un protocole d'échange, des moyens pour émettre (AMP1, TR1, OSC1, MODEM1) ces informations formatées sur le support de transmission d'informations en direction d'un appareil donné (10) ou d'un ensemble d'appareils (10, 20, 30) de l'installation, ces appareils (10, 20, 30) comprenant des moyens de réception (TR3, FLT3, MODEM3, MP3) de ces informations formatées.

2. Système selon la revendication 1, caractérisé en ce que les appareils (10, 20, 30) comprennent, en outre, des moyens de transmission (MODEM3, OSC3, AMP3, TR3) d'informations formatées.

3. Système selon la revendication 2, caractérisé en ce que l'appareil de communication (AC) comprend des moyens pour recevoir des informations formatées selon le protocole d'échange.

4. Système selon la revendication 3, caractérisé en ce que l'appareil de communication (AC) comprend des moyens de reconnaissance (MP1, MEM1) de la vitesse de transmission des informations reçues.

5. Système selon l'une des revendications 1 à 4, caractérisé en ce que les informations formatées sont transmises dans l'installation sous la forme de messages numérisés par modulation de fréquence.

6. Système selon l'une des revendications 1 à 5, caractérisée en ce que le support de transmission d'informations est le circuit de distribution électrique (CP).

## Patentansprüche

1. System zur Übertragung von Daten in einem lokalen Netz, das mehrere Geräte (10, 20, 30) an einem Informationsüberträger (CP) und ein Kommunikationsgerät (AC) umfaßt, dadurch gekennzeichnet, daß das Kommunikationsgerät Vorrichtungen zum Empfang von Informationen (TR2, FLT1, AMP2, MODEM2), die über ein elektrisches Verteilernetz verteilt werden und Preisänderungen anzeigen, Vorrichtungen für das Umschreiben (MP1, MEM1) der Informationen über die Preisänderungen in formatierte Informationen gemäß einem Änderungsprotokoll, Vorrichtungen zum Ausgeben (AMP1, TR1, OSC1, MODEM1) dieser formatierten Informationen auf die Informationsübertragungsleitung in Richtung eines gegebenen Gerätes (10) oder einer gegebenen Gruppe von Geräten (10, 20, 30) der Installation umfaßt, wobei die Geräte (10, 20, 30) Vorrichtungen zum Empfang (TR3, FLT3, MODEM3, MP3) dieser formatierten Informationen umfassen.

2. System nach Anspruch 1, dadurch gekennzeichnet, daß die Geräte (10, 20, 30) außerdem Vorrichtungen zum Übertragen (MODEM3, OSC3, AMP3, TR3) von formatierten Informationen umfassen.

3. System nach Anspruch 2, dadurch gekennzeichnet, daß das Kommunikationsgerät (AC) Vorrichtungen zum Empfang von gemäß Änderungsprotokoll formatierten Informationen umfaßt.

4. System nach Anspruch 3, dadurch gekennzeichnet, daß das Kommunikationsgerät (AC) Vorrichtungen (MP1, MEM1) zum Erkennen der Übertragungsgeschwindigkeit der empfangenen Informationen umfaßt.

5. System nach einem der Ansprüche 1 bis 4, dadurch gekennzeichnet, daß die formatierten Informationen in dem Netz in Form von numerischen Nachrichten frequenzmoduliert übertragen werden.

6. System nach einem der Ansprüche 1 bis 5, dadurch gekennzeichnet, daß der Informationsüberträger der elektrische Verteilerkreis (CP) ist.

## Claims

1. System for transmitting data in a domestic installation comprising a plurality of appliances (10, 20, 30) distributed on a data transmission medium (CP), and a communication appliance (AC), characterised in that the said communication appliance comprises information reception means (TR2, FLT1, AMP2, MODEM2) present on an electrical distribution network and representing a change in tariff, means (MP1, MEM1) for transcribing the change of tariff information into information formatted according to an exchange protocol, means (AMP1, TR1, OSC1, MODEM1) for sending this formatted information over the data transmission medium in the direction of a given appliance (10) or set of appliances (10, 20, 30) in the installation, these appliances (10, 20, 30) comprising means (TR3, FLT3, MODEM3, MP3) for receiving this formatted information.

2. System according to Claim 1, characterised in that the appliances (10, 20, 30) also comprise means (MODEM3, OSC3, AMP3, TR3) for transmitting formatted information.

3. System according to Claim 2, characterised in that the communication appliance (AC) comprises means for receiving information formatted according to the exchange protocol.

4. System according to Claim 3, characterised in that the communication appliance (AC) comprises means (MP1, MEM1) for recognising the transmission rate of the information received.

5. System according to one of Claims 1 to 4, characterised in that the formatted information is transmitted in the installation in the form of messages digitised by frequency modulation.

6. System according to one of Claims 1 to 5, characterised in that the information transmission medium is the electrical distribution circuit (CP).
